# EUROPEAN PATENT APPLICATION

(11) **EP 4 778 372 A1**
(43) Date of publication of application: **22.07.2026**
(21) Application number: 24864593.9
(22) Date of filing: 10.09.2024
(51) Int. Cl.: A01B 33/02, A01B 33/08, A01B 33/10

(54) **SCARIFIER**

(30) Priority: 11.09.2023 CN 202322459192 U
(71) Applicant: Greenworks (Jiangsu) Co., Ltd, Changzhou, Jiangsu 213023 (CN)
(72) Inventor: YUAN, Hongde, hangzhou, Jiangsu 213023 (CN); WANG, Yu, hangzhou, Jiangsu 213023 (CN)
(74) Representative: Bergenstråhle & Partners AB
(86) International application number: PCT/CN2024/117881
(87) International publication number: WO 2025/055874

(57) **Abstract**

A tiller includes a frame, an operation device, an operation driving assembly, an energy storage assembly, and a control assembly. The operation device includes a tine assembly. The operation driving assembly is coupled to the frame and the tine assembly to drive the tine assembly to rotate. The energy storage assembly is coupled to the frame and the operation driving assembly and supplies power thereto. The control assembly is electrically coupled to the operation driving assembly to control a rotating direction of the operation driving assembly, so as to enable the tine assembly to rotate forward or backward.

## Description

### CROSS REFERENCE TO RELATED APPLICATION

The present application is a continuation Application of PCT application No. PCT/CN2024/117881 filed on September 10, 2024, which claims the benefit of CN202322459192.X filed on September 11, 2023. All the above are hereby incorporated by reference for all purposes.

### TECHNICAL FIELD

The disclosure relates to a tiller, which belongs to a technical field of agricultural machinery and equipment.

### BACKGROUND

Due to the limitations of the working environment and structure, most of the tillers on the market use traditional fuel engines and transmit power through belts. However, the traditional fuel engines have the disadvantages of high noise, large vibration and serious pollution, and have gradually been phased out of the market. At present, a tiller driven by a motor appears on the market, and the tiller is driven by the motor, so that the tiller has low noise during working, low vibration and no pollution to the environment, and is deeply favored by consumers.

Most conventional tillers include wheels and tines, the wheels drive the tiller to move, and the soil on the surface is loosened by the tines during the traveling process. When the soil on the surface is relatively hard, through reducing the traveling speed of the wheel, the tines continuously cut the soil at the same position to achieve the purpose of loosening the soil. When the soil on the surface is relatively soft, through increasing the traveling speed of the wheel and reducing the time that the tines stay at the same position to achieve the purpose of quickly loosening the soil. However, when the soil is relatively hard, no matter how long the tine cuts at the same position, the purpose of loosening the soil cannot be achieved. When the tine cuts hard soil, the vibration of the tiller will be aggravated, or the tiller may even jump, which makes it more difficult for the operator to control the tiller, and reduces the working efficiency of the tiller.

In view of this, it is necessary to improve the conventional tiller to solve the above problems.

### SUMMARY

The disclosure provides a tiller to solve a problem in the conventional art that the tiller cannot loosen hard soil.

In one or more embodiments, a tiller is provided, and the tiller includes a frame, an operation device, an operation driving assembly, an energy storage assembly and a control assembly.

The operation device includes a tine assembly.

The operation driving assembly is fixedly mounted on the frame and coupled to the tine assembly to drive the tine assembly to rotate.

The energy storage assembly is fixedly mounted on the frame and electrically coupled to the operation driving assembly to supply power to the operation driving assembly.

The control assembly is electrically coupled to the operation driving assembly to control a rotating direction of the operation driving assembly so as to enable the tine assembly to rotate forward or backward.

In some embodiments, the control assembly includes an operation switch, the operation switch is configured to control a rotating direction of the operation driving assembly to control the tine assembly to rotate forward or backward, and a forward rotating speed of the tine assembly is greater than a backward rotating speed of the tine assembly.

In some embodiments, the operation driving assembly includes a control board and an operation driving motor electrically coupled to the control board, the control board is electrically coupled to the control assembly, the operation switch controls the operation driving motor, via the control board, to rotate in the forward direction to cause the tine assembly to rotate in the forward direction of the tiller, and the operation switch controls the operation driving motor, via the control board, to rotate in the backward direction to cause the tine assembly to rotate in the backward direction of the tiller.

In some embodiments, the operation driving motor includes an operation output shaft, the operation device further includes an operation gear assembly and an operation transmission shaft, the operation transmission shaft connects the operation gear assembly to the tine assembly, the operation gear assembly includes a transmission part, a first gear and a second gear, the second gear is meshed with the first gear, a first end of the transmission part is meshed with the operation output shaft, a second end of the transmission part is meshed with the first gear, the second gear defines a shaft hole, and the operation transmission shaft is accommodated in the shaft hole and rotates synchronously with the second gear.

In some embodiments, the operation gear assembly further includes a housing, a first end of the housing is fixedly coupled to the frame, a second end of the housing is disposed around the operation transmission shaft, the operation transmission shaft is rotatable relative to the housing, the housing defines an accommodating cavity therein, the first gear and the second gear are received in the accommodating cavity, a first end of the transmission part is received in the accommodating cavity, and a second end of the transmission part extends outward from the accommodating cavity and is meshed with the operation output shaft.

In some embodiments, the tine assembly includes a first tine and a second tine mounted on the operation transmission shaft, the first tine and the second tine are respectively disposed at two ends of the operation transmission shaft, and the first tine and the second tine are rotatable synchronously with the operation transmission shaft.

In some embodiments, the operation device further includes a protective cover fixedly coupled to the frame, the protective cover defines an operation cavity, and the tine assembly is accommodated in the operation cavity.

In some embodiments, the protective cover includes a protection board and a side plate disposed on a side surface of the protection board, the protection board includes a locking block, a sliding groove is arranged on the side plate, and the locking block is accommodated in the sliding groove and slidable along the sliding groove so as to enable the side plate to slide relative to the protection board to adjust a height between the protection board and a surface to be loosened.

In some embodiments, the protection board includes an adjustment component and a locking structure, the adjustment component includes an inserting groove, the operation device further includes an adjustment rod, the adjustment rod is accommodated in the inserting groove and is movable in the inserting groove, and the locking structure abuts against the adjustment rod to limit a movement distance of the adjustment rod relative to the adjustment component.

In some embodiments, the adjustment rod is disposed perpendicular to the surface, an arc-shaped abutment component is arranged on a side of the adjustment rod away from the adjustment component, and the abutment component is configured to abut against the surface.

Beneficial effects of the disclosure are that: the tiller of the disclosure uses the control assembly to control the operation driving assembly to rotate in different directions, thereby driving the tine assembly to rotate forward or backward. When the soil on the surface is relatively soft, the tine assembly rotates forward to quickly loosen the soil. When the soil on the surface is relatively soft, the tine assembly rotates backward to loosen the hard soil, which means that through changing the rotating direction of the tine assembly, the tiller can adapt to different types of dirt, which improves working efficiency of the tiller, and further improves a practicability of the tiller.

### BRIEF DESCRIPTION OF THE DRAWINGS

FIG. 1 is a perspective structural view of a tiller according to at least one embodiment of the disclosure.
FIG. 2 is an exploded view of a tiller in FIG. 1.
FIG. 3 is an enlarged view of a portion A in FIG. 2.
FIG. 4 is a perspective schematic view of an operation device and an operation driving assembly in FIG. 2.
FIG. 5 is an exploded view of an operation device in FIG. 4.
FIG. 6 is an enlarged view of a portion B in FIG. 5.
FIG. 7 is an enlarged view of a portion C in FIG. 5.
FIG. 8 is an enlarged view of a portion D in FIG. 5.
FIG. 9 is a perspective schematic view of an operation device in FIG. 5 from another angle.
FIG. 10 is an exploded view of an operation device in FIG. 9.
FIG. 11 is an enlarged view of a portion E in FIG. 10.
FIG. 12 is an enlarged view of a portion F in FIG. 10.

### PART NUMBER DESCRIPTION

100-tiller, 1-handle assembly, 11-connecting rod, 12-handle rod, 13-control assembly, 131-starting switch, 132-power-on switch, 133-traveling switch, 134-operation switch, 2-frame, 4-operation device. 41-operation gear assembly, 411-first gear, 412-second gear, 413-shaft hole, 418-first limiting surface, 414-housing, 415-first housing, 416-second housing, 417-accommodating cavity, 42-operation transmission shaft, 421-second limiting surface, 43-tine assembly, 431-first tine, 432-second tine, 433-transmission hole, 434-latch, 44-protective cover, 441-side plate, 442-sliding groove, 443-fender, 444-operation cavity, 45-adjustment rod, 451-abutment component, 452-locking hole, 453-anti-detachment structure, 46-transmission part, 461-third gear, 462-gear shaft, 463-fourth gear, 47-protection board, 471-locking block, 472-driving hole, 473-adjustment component, 474-inserting groove, 475-locking structure, 5-operation driving assembly, 51-operation output shaft, 52-operation driving motor, 6-traveling assembly, 61-traveling gearbox, 62-traveling transmission shaft, 63-wheel, 7-movement driving assembly, 8-fixing member.

### DETAILED DESCRIPTION

To enable objectives, technical solutions, and advantages of the disclosure to be clearer, the following describes the disclosure in detail with reference to the accompanying drawings and specific embodiments.

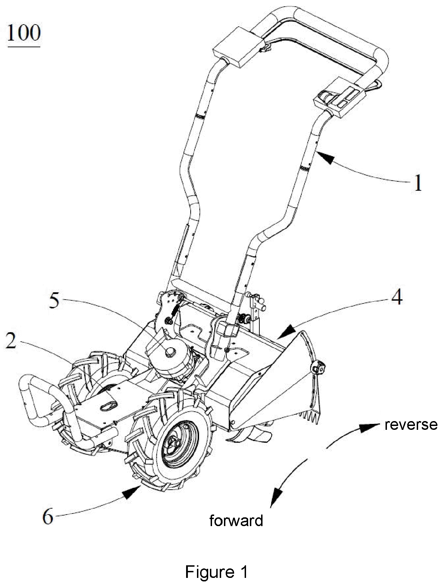

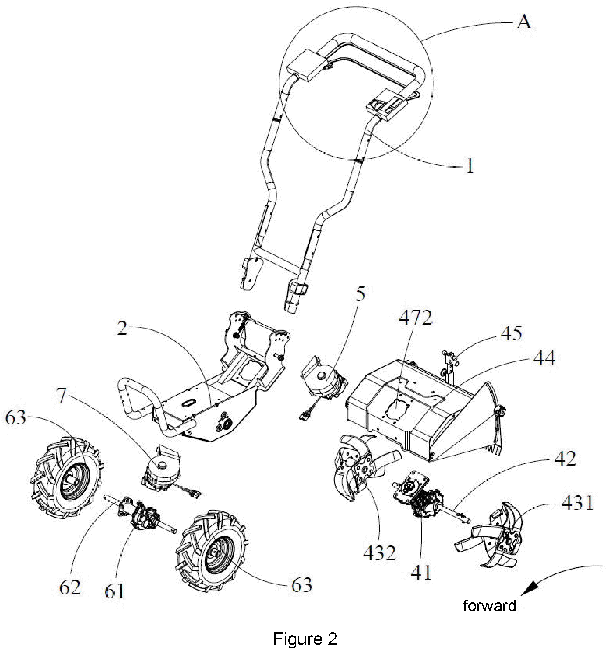

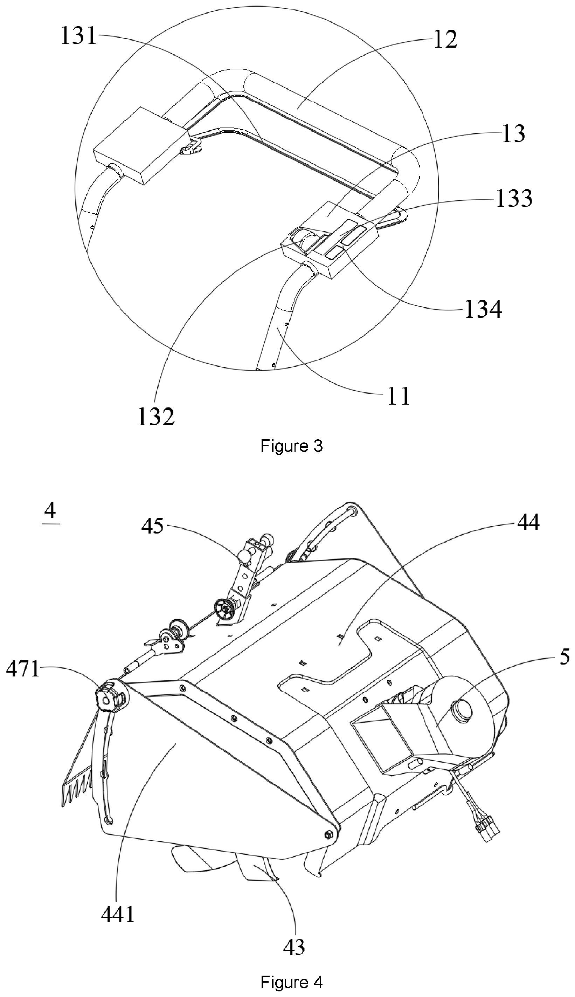

Please refer to FIG. 1 and FIG. 2 in combination with FIG. 3. The disclosure provides a tiller 100 for loosening soil on a surface. The tiller 100 includes a frame 2, an energy storage assembly (not shown), a handle assembly 1, a traveling assembly 6, a movement driving assembly 7, an operation device 4 and an operation driving assembly 5. The frame 2 is a main structural component of the tiller 100, the handle assembly 1 is coupled to the frame 2, and an operator may hold the handle assembly 1 to push or pull the tiller 100 to move. Meanwhile, the handle assembly 1 further includes a control assembly 13 for controlling a forward movement, a backward movement, a forward or backward speed adjustment of the tiller 100 and an operation direction of the working device 4, so that the operator can get various parameters of the tiller 100 in all directions.

The energy storage assembly is fixedly coupled to the frame 2, and is electrically coupled with the movement driving assembly 7 and the operation driving assembly 5, respectively, to supply power to the movement driving assembly 7 and the operation driving assembly 5, respectively, so that the movement driving assembly 7 and the operation driving assembly 5 output kinetic energy outward.

The traveling assembly 6 includes a traveling gearbox 61, a traveling transmission shaft 62 and wheels 63. There are two wheels 63 and the two wheels are fixedly coupled to two ends of the traveling transmission shaft 62 respectively, so that the traveling transmission shaft 62 can rotate synchronously with the two wheels 63. A first end of the traveling gearbox 61 is fixedly coupled to the frame 2, and a second end of the traveling gearbox 61 is sleeved outside the traveling transmission shaft 62 to drive the traveling transmission shaft 62 to rotate through the traveling gearbox 61, thereby driving the wheels 63 to rotate. Specifically, the traveling assembly 6 is disposed directly below the frame 2 or at a front end of the frame 2 in a forward direction of the tiller 100 to support the frame 2.

The movement driving assembly 7 is fixedly coupled to the frame 2, one end of the movement driving assembly 7 is meshed with the traveling gearbox 61, and the movement driving assembly 7 can drive a plurality of gears in the traveling gearbox 61 to rotate to drive the wheels 63 to rotate. Wherein, the movement driving assembly 7 is specifically a driving motor, a circuit board (not shown) is arranged in the driving motor, and the circuit board is electrically coupled to the control assembly 13, so that the control assembly 13 can adjust a rotating direction and a rotating speed of the driving motor through the circuit board, thereby controlling a rotating direction and a rotating speed of the wheel 63, and controlling a traveling direction and a traveling speed of the tiller 100. In an embodiment, the control assembly 13 includes a traveling switch 133, and the traveling switch 133 includes a forward gear, a stop gear, a reverse gear and a speed gear. The operator controls the forward movement, the backward movement, a forward speed, and a backward speed of the tiller 100 through adjusting the traveling switch 133.

In this embodiment, the rotating speed of the driving motor is decelerated by the traveling gearbox 61 and a torque is increased, then the rotating speed of the driving motor is transmitted to the traveling transmission shaft 62, and then transmitted to the wheel 63, which increases a force for driving the wheel 63 while reducing the rotating speed of the wheel 63, and improves a driving strength of the tiller 100. In an embodiment, the rotating speed of the driving motor is between 5500 rpm and 20000 rpm, a forward rotating speed of the wheel 63 is between 0 m/s and 1.2 m/s, and a backward rotating speed of the wheel 63 is between 0 m/s and 0.6 m/s, which means that a forward speed of the wheel 63 is between 0 m/s and 1.2 m/s, and a backward speed of the wheel 63 is between 0 m/s and 0.6 m/s, so as to avoid that the operator is damaged due to too fast backward speed of the tiller 100, which improves a safety performance of the tiller 100. Of course, in other embodiments, the rotating speeds of the driving motor and the wheels 63 may be set according to actual needs, which is not limited thereto.

A specific structure of the frame 2, a specific structure of the energy storage assembly, a specific structure of the handle assembly 1, a specific structure of the traveling assembly 6, a specific structure of the movement driving assembly 7, and coupling modes between the components in this embodiment may be designed according to the conventional art, which is not limited thereto. Main improvement points of the disclosure are the operation device 4, the operation driving assembly 5, and the control assembly 13, and following description will describe the main improvement points.

Please refer to FIG. 4. The operation device 4 includes an operation gear assembly 41, an operation transmission shaft 42 and a tine assembly 43. The operation gear assembly 41 is fixedly coupled to the frame 2, the operation transmission shaft 42 is coupled to the operation gear assembly 41 and the tine assembly 43, and the operation gear assembly 41 can drive the operation transmission shaft 42 to rotate, and then drive the tine assembly 43 to rotate. In an embodiment, the operation device 4 is fixedly coupled to the frame 2, the operation device 4 is coupled to a rear end of the frame 2 in the forward direction of the tiller 100, the handle assembly 1 are disposed on an upper side of the frame 2, and the operation device 4 is disposed on a lower side of the frame 2, so that the operator can increase a pressure on the operation device 4 through pressing a handle, thereby enhancing a cutting strength of the tine assembly 43 on the soil, and improving a cutting depth and efficiency of the tiller 100.

The operation driving assembly 5 is fixedly mounted on the frame 2 and coupled to the operation gear assembly 41 to drive the operation gear assembly 41 to rotate. In an embodiment, the operation driving assembly 5 is disposed at the rear end of the frame 2, and the operation driving assembly 5 is coupled to the operation device 4, so that the operation driving assembly 5 can drive the tine assembly 43 to loosen the soil on the operation surface through the operation gear assembly 41.

A rotation of the tine assembly 43 toward the forward direction of the tiller 100 is defined as a forward rotation, and a rotation away from the forward direction of the tiller 100 is defined as a backward rotation. The control assembly 13 is electrically coupled to the operation driving assembly 5 to control a rotating direction of the operation driving assembly 5, so that the tine assembly 43 can rotate in the forward direction or the backward direction, and the tiller 100 can turn soil with different hardness.

Please refer to FIG. 3 through FIG. 5, the control assembly 13 includes an operation switch 134, the operation switch 134 includes a forward rotation gear and a backward rotation gear. When the operation switch 134 is located at the forward rotation gear or the backward rotation gear, the tine assembly 43 is controlled to rotate forward or backward, and a forward rotating speed of the tine assembly 43 is greater than a backward rotating speed of the tine assembly 43. In this way, when the soil on the surface is relatively hard, the tine assembly 43 is controlled to rotate backward, and the rotating speed of the tine assembly 43 is reduced to improve a cutting force of the tine assembly 43 on the soil, so that the soil is more easily loosened. In some embodiments, a backward rotation of the tine assembly 43 is suitable for initial soil, which means that when the soil is loosened for the first time on the surface, a speed of loosening the soil is slow, a strength of loosening the soil is large, which improves a soil loosening effect. A forward rotation of the tine assembly 43 is suitable for the soil that has been cultivated once, the speed of loosening the soil is fast, and the soil loosening efficiency is high.

The control assembly 13 further includes a starting switch 131 and a power-on switch 132, the power-on switch 132 is used for energizing a whole machine of the tiller 100. The starting switch 131 is used for controlling a startup and stop of the movement driving assembly 7 and/or the operation driving assembly 5. In an embodiment, in actual operation, the operator first starts the power-on switch 132, so that the energy storage assembly supplies power to the movement driving assembly 7 and the operation device 4, and the whole machine is powered on, and then the starting switch 131 is operated to enable the tiller 100 to move and/or work.

There are two embodiments of the tiller 100. In a first embodiment, after the operator pulls the starting switch 131, only the movement driving assembly 7 works, and then the tiller 100 moves. At this time, the rotating direction and the rotating speed of the movement driving assembly 7 may be controlled by the traveling switch 133, thereby controlling the forward movement, the backward movement and a traveling speed of the tiller 100. If starting the tine assembly 43, the operation switch 134 needs to be turned on, and a rotating direction and a rotating speed of the operation device 4 are controlled by the operation switch 134. In an
embodiment, a forward rotation, a backward rotation and a rotating speed of the operation driving assembly 5 are controlled, and then the forward rotation, the backward rotation and the rotating speed of the tine assembly 43 are controlled.

In a second embodiment, after the operator pulls the starting switch 131, both the movement driving assembly 7 and the operation driving assembly 5 start to work, which means that the tiller 100 start to move and work, which may be running at the same time, or running sequentially. At this time, the rotating direction and rotating speed of the movement driving assembly 7 may be controlled by the traveling switch 133, thereby controlling the forward movement, the backward movement and the traveling speed of the tiller 100. Or the rotating direction of the operation device 4 may be controlled by the traveling switch 134, in an embodiment, by controlling the forward or backward rotation of the operation driving assembly 5, thereby controlling the forward or backward rotation of the tine assembly 43. In some embodiments, the operation switch 134 may also control the rotating speed of the tine assembly 43, which is not limited thereto.

In the second embodiment, the tiller 100 further includes a transition switch (not shown), the transition switch is used to control the operation driving assembly 5 and the tine assembly 43 to stop. When the transition switch controls the tine assembly 43 to stop, the tiller 100 only move and do not work, which is convenient for the tiller 100 to change places.

In the disclosure, the traveling switch 133 is configured to control the forward rotation, the backward rotation and the rotating speed of the movement driving assembly 7, and the operation switch 134 is configured to control the forward rotation, backward rotation and the rotating speed of the operation driving assembly 5. Of course, in other embodiments, the traveling switch 133 may also be configured to only control the forward movement and the backward movement of the tiller 100, or only control the traveling speed of the tiller 100. The operation switch 134 may also be configured to only control the forward movement and the backward movement of the tine assembly 43, or only control the rotating speed of the tine assembly 43, which is not limited thereto.

Of course, in other embodiments, there may be no power-on switch 132, which means that the traveling switch 133 and/or the operation switch 134 are directly operated after the starting switch 131 is turned on, so that the tiller 100 may move and/or work. Or, there may be no traveling switch 133 and/or no operation switch 134, which means that the starting switch 131 is directly operated after the power-on switch 132 is turned on, and the tiller 100 synchronously move and walk, which is not limited thereto.

In an embodiment, the handle assembly 1 includes two connecting rods 11 and a handle rod 12. A first end of each of the two connecting rods 11 is coupled to the frame 2, and two second ends of the two connecting rods 11 are coupled to each other through the handle rod 12. The handle rod 12 is substantially perpendicular to the two connecting rods 11, which is convenient for the operator to hold and operate the tiller 100. Of course, in other embodiments, the connecting rod 11 and the handle rod 12 may also be integrally disposed, which is not limited thereto.

The control assembly 13 is mounted at one end of the connecting rod 11 close to the handle rod 12. One end of the starting switch 131 is coupled to the control assembly 13. A shape of the starting switch 131 is similar to a shape of the handle rod 12 and is located directly below the handle rod 12. When the operator needs to start the tiller 100, a force that moves toward the handle rod 12 is applied to the starting switch 131, so that the starting switch 131 rotates toward the connecting rod 11, and the starting switch 131 is turned on. After the force applied to the starting switch 131 is canceled, the starting switch 131 rotates away from the connecting rod 11, and the starting switch 131 is turned off.

The operation driving assembly 5 includes a control board (not shown) and an operation driving motor 52 electrically coupled to the control board. The control board is electrically coupled to the control assembly 13. When the operation switch 134 is located at the forward rotation gear, the control board controls the operation driving motor 52 to rotate in the forward direction to cause the tine assembly 43 to rotate in the forward direction, so as to realize a fast soil loosening of the tiller 100. When the operation switch 134 is located at the backward rotation gear, the control board controls the operation driving motor 52 to rotate in the backward direction to cause the tine assembly 43 to rotate in the backward direction, so as to realize a slow soil loosening of the tiller 100.

In an embodiment, the control board is disposed in the operation driving motor 52, and can receive a control signal sent by the control assembly 13, thereby controlling a rotating direction of the operation driving motor 52. Of course, in other embodiments, the control board may not be disposed inside the operation driving motor 52, which means arranged at other positions of the tiller 100. The tiller 100 may not include the control board, and the operation driving motor 52 may be directly controlled by the control assembly 13. When the control board is not disposed in the tiller 100, a voltage and current direction of the energy storage assembly supplying power to the operation driving motor 52 may be directly controlled by the control assembly 13, and the operation driving motor 52 may also be controlled, which is not limited thereto.

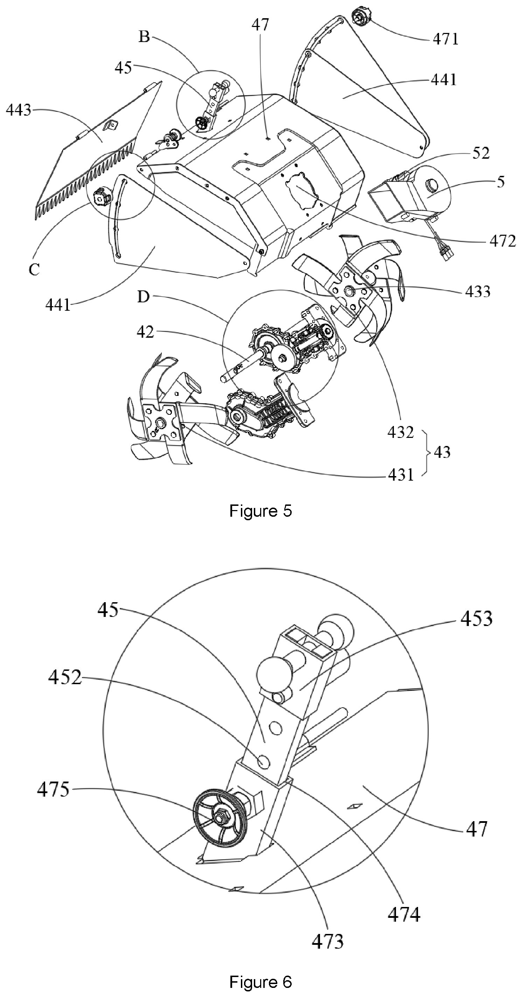

Please refer to FIG. 5, FIG. 8, FIG. 10 and FIG. 12. The operation driving motor 52 includes an operation output shaft 51 and an operation gear rack (not labeled) on the operation output shaft 51. The operation gear assembly includes a transmission part 46, a first gear 411 and a second gear 412. The second gear 412 is meshed with the first gear 411. A first end of the transmission part 46 is meshed with the operation gear rack, and a second end of the transmission part 46 is meshed with the first gear 411. The second gear 412 defines a shaft hole 413, and the operation transmission shaft 42 is accommodated in the shaft hole 413 and rotates synchronously with the second gear 412. In an embodiment, the operation output shaft 51 is rotatably coupled to the operation driving motor 52, and the operation output shaft 51 is driven to rotate by the operation driving motor 52. There is a plurality of operation gear racks which are all disposed at one end of the operation output shaft 51 away from the operation driving motor 52. The operation gear racks are disposed along the extending direction of the operation output shaft 51. The plurality of operation gear racks is arranged at intervals on an outer peripheral surface of the operation output shaft 51, and the operation gear racks are meshed with one end of the transmission part 46 to transmit power of the operation output shaft 51 to the transmission part 46. The shaft hole 413 is disposed at a central axis of the second gear 412, and the shaft hole 413 is circular and has a size matching the operation transmission shaft 42, so that the operation transmission shaft 42 is accommodated in the shaft hole 413, and a third gear 461 and the operation transmission shaft 42 rotate synchronously. In some embodiments, a first limiting surface 418 is disposed in the shaft hole 413, so that the shaft hole 413 cannot form a complete circle. A second limiting surface 421 is disposed on an outer side wall of the operation transmission shaft 42, so that a cross section of the operation transmission shaft 42 cannot form a complete circle, the operation transmission shaft 42 is accommodated in the shaft hole 413, and the first limiting surface 418 is fitted with the second limiting surface 421 to prevent the operation transmission shaft 42 from rotating in the shaft hole 413.

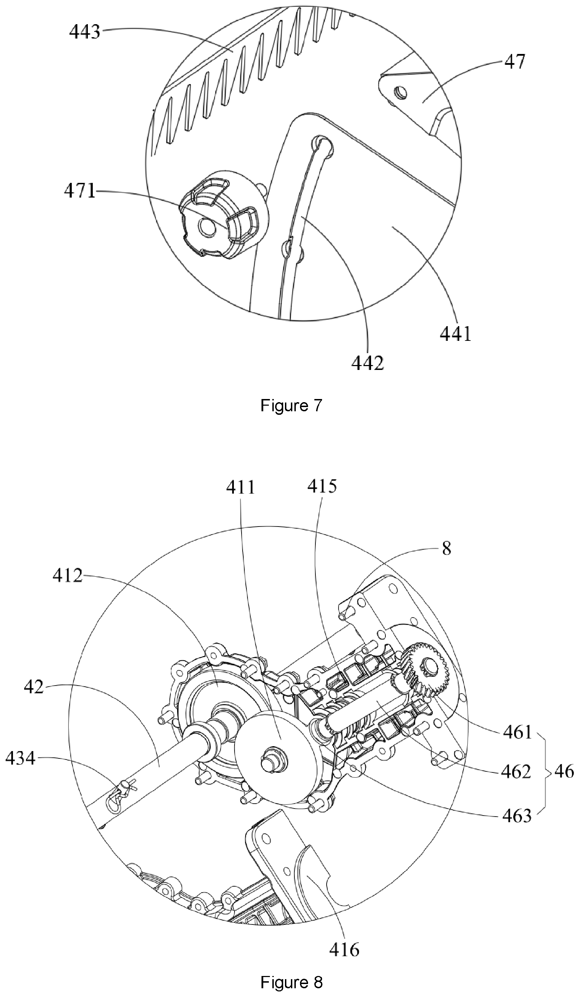

In an embodiment, please refer to FIG. 8. The transmission part 46 includes the third gear 461, a fourth gear 463 and a gear shaft 462 connecting the third gear 461 to the fourth gear 463. The third gear 461 is meshed with the operation gear racks, so that the operation output shaft 51 can drive the third gear 461 to rotate, and then drive the fourth gear 463 to rotate synchronously through the gear shaft 462. Wherein a diameter of the third gear 461 is greater than a diameter of the fourth gear 463. The first gear 411 includes a first gear rack set and a second gear rack set, and the fourth gear 463 is meshed with the first gear rack set to drive the first gear 411 to rotate. A diameter of a gear surface enclosed by the first gear rack set is greater than the diameter of the fourth gear 463 to reduce the rotating speed of the transmission part. In an embodiment, the first gear rack set and the second gear rack set are fixedly coupled to an outer surface of the third gear 461, and the diameter of the gear surface enclosed by the first gear rack set is greater than a diameter of a gear surface enclosed by the second gear rack set. The fourth gear 463 is meshed with the second gear rack set, so that the second gear rack set can drive the fourth gear 463 to rotate, thereby realizing a transmission of kinetic energy. The diameter of the fourth gear 463 is greater than the diameter of the gear surface enclosed by the second gear rack set, thereby further reducing a rotating speed of the operation output shaft 51 and improving a driving strength.

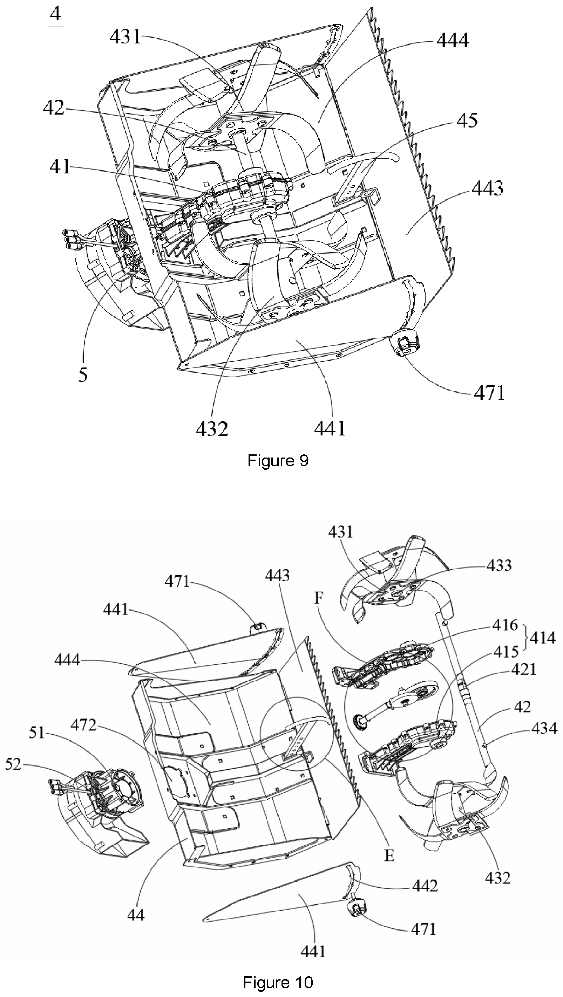

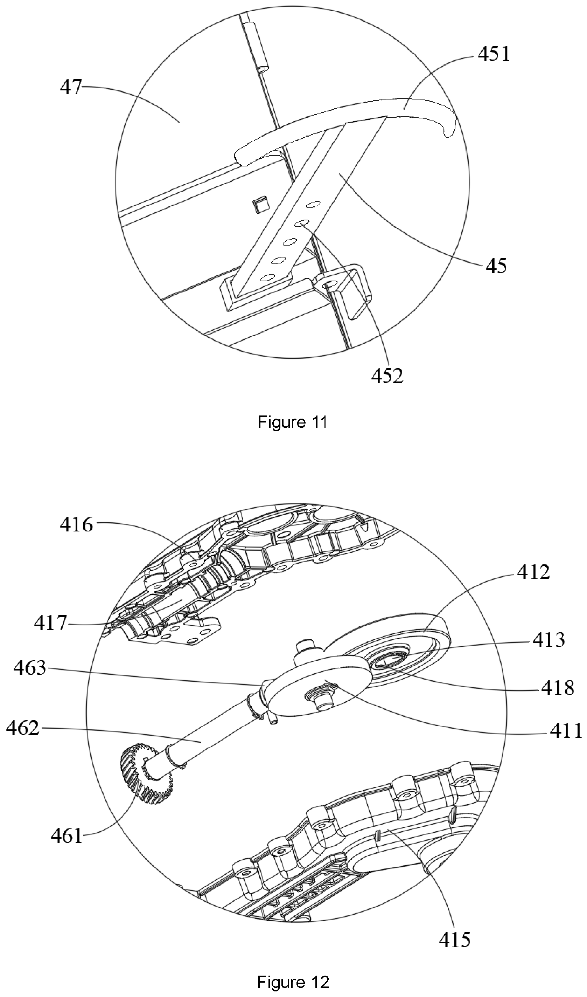

Please refer to FIG. 10 and FIG. 12. The operation gear assembly 41 further includes a housing 414. A first end of the housing 414 is fixedly coupled to the frame 2, and a second end of the housing 414 is disposed around the operation transmission shaft 42. The operation transmission shaft 42 is rotatable relative to the housing 414, the housing 414 defines an accommodating cavity 417, and the first gear 411 and the second gear 412 are received in the accommodating cavity 417. A first end of the transmission part 46 is received in the accommodating cavity 417, and a second end of the transmission part 46 extends outward from the accommodating cavity 417 and is meshed with the operation gear rack. In an embodiment, the housing 414 includes a first housing 415 and a second housing 416, and an accommodating cavity 417 is formed between the first housing 415 and the second housing 416 to accommodate the transmission part 46, the first gear 411 and the second gear 412. Wherein, the fourth gear 463 in the transmission part 46 is accommodated in the accommodating cavity 417, and the gear shaft 462 extends from the accommodating cavity 417 toward the operation driving motor 5 and is fixedly coupled to the third gear 461 to realize a power transmission of the operation driving motor 52. In some embodiments, a sealing ring is further disposed between the first housing 415 and the second housing 416, and the first housing 415 and the second housing 416 are coupled via a fixing member 8 to achieve a sealing of the accommodating cavity 417 to protect the components arranged in the accommodating cavity 417. Further, lubricating oil may be injected into the accommodating cavity 417 to reduce a friction of each gear during rotation and prolong a duration life of the operation gear assembly 41.

Of course, a bearing (not shown) is further disposed between the first gear 411 and the housing 414, and a bearing is also disposed between the gear shaft 462 and the housing 414, so that on one hand, a positioning of the gear shaft 462 and the first gear 411 on the housing 414 is realized, a deviation during use is avoided, a connection stability is improved, and on the other hand, a resistance of the gear shaft 462 and the first gear 411 during rotation is reduced, thereby reducing energy loss and improving transmission efficiency.

In this embodiment, the operation driving motor 52 rotates at a high speed, then decelerates through the operation driving motor and increases the torque, and then the power is transmitted to the operation transmission shaft 42 and then transmitted to the tine assembly 43, which increases a rotation force of the tine assembly 43 while reducing the rotating speed of the tine assembly 43, and improves a soil loosening strength of the tiller 100. In an embodiment, the rotating speed of the operation driving motor 52 is between 3600 rpm and 18000 rpm, the rotating speed of the transmission part 46 is between 7000 rpm and 18000 rpm, a rotating speed of the first gear 411 is between 800 rpm and 1600 rpm, a rotating speed of the second gear 412 is between 100 rpm and 350 rpm, and the rotating speed of the tine assembly 43 is between 100 rpm and 500 rpm. Specifically, the forward rotating speed of the tine assembly 43 is greater than the backward rotating speed of the tine assembly 43. Of course, In other embodiments, the rotating speed of the operation driving motor 52, the rotating speed of the transmission part 46, the rotating speed of the first gear 411 and the rotating speed of the second gear 412 may be set according to actual conditions, as long as the forward rotating speed of the tine assembly 43 is greater than the backward rotating speed of the tine assembly 43, which is not limited thereto.

Please refer to FIG. 5 and FIG. 8. The tine assembly 43 includes a first tine 431 and a second tine 432 mounted on the operation transmission shaft 42, the first tine 431 and the second tine 432 are respectively disposed at two ends of the operation transmission shaft 42, and the first tine 431 and the second tine 432 are rotatable synchronously with the operation transmission shaft 42. In an embodiment, transmission holes 433 are disposed at central axes of the first tine 431 and the second tine 432. The operation transmission shaft 42 is accommodated in the transmission hole 433, so that the first tine 431 and the second tine 432 are respectively coupled to the operation transmission shaft 42. The tine assembly 43 further includes a latch 434, the latch 434 passes through the first tine 431 and the operation transmission shaft 42 to prevent the first tine 431 from sliding off the operation transmission shaft 42 during operation. The latch 434 passes through the second tine 432 and the operation transmission shaft 42 to prevent the first tine 431 from sliding off the operation transmission shaft 42 during the operation, thereby improving a connection stability of the first tine 431 and the second tine 432 with the operation transmission shaft 42.

Please refer to FIG. 1, FIG. 9 and FIG. 10. The operation device 4 further includes a protective cover 44 fixedly coupled to the frame 2, the protective cover defines an operation cavity 444, and the operation gear assembly 41, the operation transmission shaft 42 and the tine assembly 43 are accommodated in the operation cavity 444. Wherein, the protective cover 44 includes a protection board 47 and a side plate 441 disposed on a side surface of the protection board 47, the protection board 47 includes a locking block 471, a sliding groove 442 is arranged on the side plate 441, and the locking block 471 is accommodated in the sliding groove 442 so as to enable the side plate 441 to slide relative to the protection board 47 to adjust a height between the protection board 47 and a surface to be loosened. In an embodiment, the protection board 47 is fixedly coupled to the frame 2, and the protective board 47 is disposed in a direction extending from the frame 2 to a direction away from the tiller 100. The protective board 47 includes a driving hole 472, and the operation driving motor 52 is accommodated in the driving hole 472 and fixedly coupled to the protection board 47 by the fixing member 8. The operation cavity 444 is disposed on a side of the operation device facing the surface to be loosened, on one hand is configured to protect the operation gear assembly 41, the operation transmission shaft 42, and the tine assembly 43, and on the other hand is configured to ensure a safety of the operator and prevent the tine assembly 43 from smashing other debris such as stones to the operator during running.

Please refer to FIG. 4 combined with FIG. 7. There are two side plates 441 respectively disposed on two sides of the protection board 47, and the side plate 441 is disposed along the forward direction of the tiller 100. The side plate 441 is in a conical plate-shaped structure, and a top corner of the side plate 441 is rotatably coupled to a fixing plate. The sliding groove 442 is disposed at one end of the conical side plate 441 which is arc-shaped, and the sliding groove 442 is in an arc shape and is similar to one side edge of the side plate 441 away from the top corner. The locking block 471 is disposed at one end of the protection board 47 away from the frame 2. When the side plate 441 is coupled to the protection board 47, the side plate 441 can rotate relative to the protection board 47 under a guidance of the sliding groove 442. The locking block 471 is accommodated in the sliding groove 442, and the locking block 471 is coupled to the side plate 441 and the protection board 47 to maintain a position of the side plate 441 relative to the protection board 47, so that the operator can adjust the position of the side plate 441 relative to the protection board 47 by himself, thereby adjusting a height between the protection board 47 and the surface to be loosened, and further controlling a soil loosening depth of the tine assembly 43.

The protective cover 44 further includes a fender 443, and the fender 443 is disposed at an end of the protective cover 44 away from the frame 2. One end of the fender 443 is rotatably coupled to the protection board 47. In an embodiment, the fender 443 is made of an elastic rubber material or an elastic polymer material, so that the fender 443 can be bent when encountering an obstacle. At the same time, the fender 443 can further block dirt thrown up by the tine assembly 43 during operation to protect the operator.

Please refer to FIG. 5, FIG. 6, FIG. 10 and FIG. 11. The protection board 47 includes an adjustment component 473 and a locking structure 475, the adjustment component 473 includes an inserting groove 474, the operation device 4 further includes an adjustment rod 45, the adjustment rod 45 is accommodated in the inserting groove 474 and is movable in the inserting groove 474, and the locking structure 475 abuts against the adjustment rod 45 to limit a movement distance of the adjustment rod 45 relative to the adjustment component 473. In an embodiment, the adjustment component 473 is disposed close to the fender 443 and is located in a middle of the protection board 47. The inserting groove 474 extends in the same direction as the adjustment component. The inserting groove 474 is disposed in a center of the adjustment component and penetrates through the adjustment component 473. A size of the adjustment rod 45 matches a size of the inserting groove 474, so that the adjustment rod 45 is accommodated in the inserting groove 474 and can move in the inserting groove 474. The adjustment rod 45 includes a locking hole 452, and the locking structure 475 passes through the locking hole 452 to abut against the adjustment rod 45 to realize a connection between the adjustment component 473 and the adjustment rod 45.

The adjustment component 473 is disposed perpendicular to the surface, an arc-shaped abutment component 451 is disposed on a side of the adjustment rod 45 away from the adjustment component 473, the abutment component 451 abuts against the surface to be loosened, and the soil loosening depth of the tiller 100 is adjusted by changing a distance that the adjustment rod 45 extends from the inserting groove 474. In an embodiment, when a size of the adjustment rod 45 extending from the inserting groove 474 is long, the soil loosening depth of the tiller 100 is relatively deep, otherwise, the soil loosening depth of the tiller 100 is relatively shallow.

An anti-detachment structure 453 is disposed at one end of the adjustment rod 45 away from the abutment component 451, and when a movement distance of the adjustment rod 45 in the inserting groove 474 is too large, the anti-detachment structure 453 abuts against the adjustment component 473 to prevent the adjustment rod 45 from falling off from the inserting groove 474, thereby improving a duration life of the tiller 100.

In this embodiment, the side plate 441 is adjustably coupled to the protection board 47 via the locking block 471 and the sliding groove 442 to adjust a height between the protection board 47 and the surface to be loosened. Of course, in other embodiments, the side plate 441 may also be configured to be adaptively adjusted, which means that the side plate 441 is automatically adjusted according to a length of the adjustment component 473 extending into the surface to adapt to the adjustment component 473, which is not limited thereto.

In summary, the tiller 100 of the disclosure uses the control assembly 13 to control the operation driving assembly 5 to rotate in different directions, thereby driving the tine assembly 43 to rotate forward or backward. When the soil on the surface is relatively soft, the tine assembly 43 rotates forward to quickly loosen the soil. When the soil on the surface is relatively soft, the tine assembly 43 rotates backward to loosen the hard soil, so that the tiller 100 can adapt to different types of dirt, which improves working efficiency of the tiller 100, and further improves a practicability of the tiller 100. Through disposing the adjustment rod 45 that can move relative to the protection board 47, the soil loosening depth of the operation device 4 on the surface is adjusted. The side plate 441 is configured to rotate relative to the protection board 47 to adjust a height of the protective cover 44 relative to the surface to be loosened, thereby adjusting the soil loosening depth of the operation device 4 on the surface.

## Claims

1. A tiller, comprising:
a frame;
an operation device, the operation device comprising a tine assembly;
an operation driving assembly, fixedly mounted on the frame and coupled to the tine assembly to drive the tine assembly to rotate;
an energy storage assembly, fixedly mounted on the frame and electrically coupled to the operation driving assembly to supply power to the operation driving assembly; and
a control assembly, electrically coupled to the operation driving assembly to control a rotating direction of the operation driving assembly so as to enable the tine assembly to rotate forward or backward.

2. The tiller according to claim 1, wherein, the control assembly comprises an operation switch, the operation switch is configured to control a rotating direction of the operation driving assembly to control the tine assembly to rotate forward or backward, and a forward rotating speed of the tine assembly is greater than a backward rotating speed of the tine assembly.

3. The tiller according to claim 2, wherein, the operation driving assembly comprises a control board and an operation driving motor electrically coupled to the control board, the control board is electrically coupled to the control assembly, wherein the operation switch controls the operation driving motor, via the control board, to rotate in a forward direction to cause the tine assembly to rotate in the forward direction of the tiller, and wherein the operation switch controls the operation driving motor, via the control board, to rotate in a backward direction to cause the tine assembly to rotate in the backward direction of the tiller.

4. The tiller according to claim 3, wherein, the operation driving motor comprises an operation output shaft, the operation device further comprises an operation gear assembly and an operation transmission shaft, the operation transmission shaft connects the operation gear assembly to the tine assembly, the operation gear assembly comprises a transmission part, a first gear and a second gear, the second gear is meshed with the first gear, a first end of the transmission part is meshed with the operation output shaft, a second end of the transmission part is meshed with the first gear, the second gear defines a shaft hole, and the operation transmission shaft is accommodated in the shaft hole and rotates synchronously with the second gear.

5. The tiller according to claim 4, wherein, the operation gear assembly further comprises a housing, a first end of the housing is fixedly coupled to the frame, a second end of the housing is disposed around the operation transmission shaft, the operation transmission shaft is rotatable relative to the housing, the housing defines an accommodating cavity therein, the first gear and the second gear are received in the accommodating cavity, a first end of the transmission part is received in the accommodating cavity, and a second end of the transmission part extends outward from the accommodating cavity and is meshed with the operation output shaft.

6. The tiller according to claim 4, wherein, the tine assembly comprises a first tine and a second tine mounted on the operation transmission shaft, the first tine and the second tine are respectively disposed at two ends of the operation transmission shaft, and the first tine and the second tine are rotatable synchronously with the operation transmission shaft.

7. The tiller according to claim 1, wherein, the operation device further comprises a protective cover fixedly coupled to the frame, the protective cover defines an operation cavity, and the tine assembly is accommodated in the operation cavity.

8. The tiller according to claim 7, wherein, the protective cover comprises a protection board and a side plate disposed on a side surface of the protection board, the protection board comprises a locking block, a sliding groove is arranged on the side plate, and the locking block is accommodated in the sliding groove and slidable along the sliding groove so as to enable the side plate to slide relative to the protection board to adjust a height between the protection board and a surface to be loosened.

9. The tiller according to claim 8, wherein, the protection board comprises an adjustment component and a locking structure, the adjustment component comprises an inserting groove, the operation device further comprises an adjustment rod, the adjustment rod is accommodated in the inserting groove and is movable in the inserting groove, and the locking structure abuts against the adjustment rod to limit a movement distance of the adjustment rod relative to the adjustment component.

10. The tiller according to claim 9, wherein, the adjustment rod is disposed perpendicular to the surface, an arc-shaped abutment component is arranged on a side of the adjustment rod away from the adjustment component, and the abutment component is configured to abut against the surface.
